# FASCICULE DE BREVET EUROPEEN

(11) **EP 2 705 003 B1**
(45) Date de publication et mention de la délivrance du brevet: **01.07.2015**
(21) Numéro de dépôt: 12718956.1
(22) Date de dépôt: 26.04.2012
(51) Int. Cl.: C03B 5/235, C03B 3/02, C03B 1/02

(54) **PROCEDE DE FUSION DU VERRE DANS UN FOUR**
VERFAHREN ZUM GLASSCHMELZEN IN EINEM OFEN
METHOD OF MELTING GLASS IN A FURNACE

(30) Priorité: 02.05.2011 BE 201100259
(43) Date de publication de la demande: 12.03.2014
(73) Titulaire: AGC Glass Europe, 1348 Louvain-la-Neuve (BE)
(72) Inventeur: BIOUL, François, 6040 Jumet (BE); COLLART, Olivier, 6040 Jumet (BE); DELVAUX, Maxime, 6040 Jumet (BE)
(74) Mandataire: Le Vaguerèse, Sylvain Jacques
(86) Numéro de dépôt international: PCT/EP2012/057655
(87) Numéro de publication internationale: WO 2012/150176

(56) Documents cités:
- WO-A1-2009/118333
- US-A- 4 362 543
- US-A- 5 290 334

## Description

La présente invention concerne les procédés de fusion du verre dans des fours dans lesquels l'énergie de fusion est produite essentiellement par des brûleurs alimentés en combustible et en oxygène ou en gaz très riche en oxygène. Ces fours sont qualifiés habituellement de four à "oxy-combustion".

Par mesure de simplification, dans la suite de la description il est fait référence à l'oxy-combustion, et à l'oxygène. Les développements à ce sujet, sauf indication contraire, englobent la mise en oeuvre d'oxy-combustion avec un oxygène pouvant renfermer une faible proportion d'air, ou encore un ensemble comprenant une partie limitée d'aéro-combustion combinée avec une oxy-combustion majoritaire.

Au nombre des avantages de l'utilisation des techniques d'oxy-combustion figurent principalement une consommation énergétique moindre et des émissions réduites de fumées indésirables.

L'oxy-combustion permet un gain énergétique au moins pour la raison que l'énergie des gaz de combustion n'est pas absorbée en partie par l'azote de l'air. Dans les fours traditionnels, même si une partie de l'énergie entraînée avec l'azote est récupérée dans les régénérateurs, les fumées finalement évacuées en entraînent encore une part significative. La présence de l'azote participe à cette perte.

La réduction de la consommation énergétique par unité de production par voie de conséquence présente en plus l'avantage de limiter les émissions de dioxyde de carbone et donc de répondre aux exigences réglementaires dans ce domaine.

La présence d'azote est aussi source de formation d'oxydes dits NOx, dont l'émission est strictement règlementée en raison des dommages liés à la présence de ces composés dans l'atmosphère.

L'utilisation d'oxygène permet de s'affranchir des problèmes liés à l'azote de l'air pour autant que le fonctionnement des fours garantisse qu'en dehors du comburant, de l'air, et donc de l'azote, ne pénètre pas accidentellement dans l'enceinte dans laquelle s'effectue la combustion.

La publication WO 2009/118333 propose de faire fonctionner des fours verrier de grande capacité en oxy-combustion. Comme indiqué ci-dessus une des conditions pour que ces fours présentent le plus possible d'avantages par rapport aux fours traditionnels utilisant de l'air comme comburant, est que la combustion s'effectue dans une atmosphère dépourvue d'azote.

L'économie de la fusion du verre par oxy-combustion est indissociable du coût lié à l'utilisation d'oxygène. Pour que cette technique reste économiquement attrayante, il faut compenser ce coût supplémentaire par des gains à la fois sur la consommation énergétique nécessaire à la fusion, mais aussi sur les techniques de récupération de la chaleur qui n'est pas immédiatement utilisée pour la fusion. Les gaz de combustion sortant des fours sont à des températures très élevées, une récupération de l'énergie évacuée avec ces gaz est indispensable. Cette énergie dans là publication précitée est utilisée pour la mise en température de l'oxygène consommé. Ce document antérieur présente en détail des modes de récupération de la chaleur des fumées pour le préchauffage de l'oxygène.

Le préchauffage de l'oxygène, dans les limites de température permises par la corrosion de l'oxygène chaud n'épuise pas l'énergie contenue dans les fumées. Une récupération supplémentaire est donc souhaitable. Dans ce sens un chauffage des matières premières est une solution éventuelle à cette question.

Néanmoins le chauffage des matières premières pose de nombreux problèmes liés à la nature des matériaux envisagés. Les produits de base entrant dans la constitution des verres se présentent dans leur forme habituelle, comme des poudres plus ou moins fines. Dans tous ces matériaux le plus abondant, qui constitue la matrice du verre, et celui qui présente la température de fusion la plus élevée, demeure la silice sous forme de sable. Les autres constituants les plus abondants : carbonate de sodium, carbonate de calcium, carbonate de magnésium, qualifiés de « fondants » sont susceptibles de conduire à l'agglomération des composants à des températures beaucoup plus basses notamment si le taux d'humidité est élevé.

Dans le préchauffage des matières premières il convient bien entendu de ne pas dépasser les températures pour lesquelles les constituants de la charge vitrifiable deviennent collants, pour éviter les agglomérations et garder une certaine fluidité permettant d'acheminer ces matériaux sans aménagements complexes.

Les matériaux utilisés présentent aussi d'ordinaire un certain taux d'humidité. Cette humidité naturelle ou non a pour avantage de limiter l'envol de poussières dans le transport de ces charges mais aussi dans l'enfournement lui-même le four étant parcouru par des courants gazeux assez vifs. Il est préférable que ce taux d'humidité ne soit pas trop élevé. La vaporisation de l'eau incluse dans ces matériaux intervient aussi dans le bilan énergétique. Par ailleurs la présence d'une teneur élevée, si elle évite l'envol de poussières, ne facilite pas l'acheminement du mélange.

Pour faciliter le traitement des matières premières pulvérulentes notamment en évitant l'entrainement de poussières, il a été proposé antérieurement de former des granules notamment des granules présentant un ensemble de particularités qui ont pour but de faciliter la fusion des constituants tout en améliorant les opérations d'alimentation du four. En pratique la constitution des granules à partir des éléments pulvérulents implique l'addition d'un liant et le passage sur un granulateur mécanique. Le liant utilisé est essentiellement constitué d'eau, à laquelle on ajoute éventuellement un silicate alcalin soluble ou de la soude.

L'opération de granulation dans tous les cas conduit à un stade donné à un accroissement de la teneur en eau des matériaux constituant la charge vitrifiable, cette eau doit être en partie au moins éliminée après la formation des granules pour faciliter l'acheminement et limiter la vaporisation au contact du bain fondu.

De manière à réduire la teneur en eau des composés agglomérés, il est aussi proposé dans la demande BE 2012/0180, déposée le 15 mars 2012, de constituer les agglomérats sous forme de « briquettes », par compression des matériaux. Pour faciliter la mise en oeuvre il est aussi proposé dans cette même demande d'utiliser pour liant une solution de carbonate de sodium. L'agglomération sous forme de briquettes permet de limiter la teneur en eau à des valeurs de l'ordre de 2 à 6% en poids, à comparer avec les teneurs des granules usuels qui se situent de l'ordre de 10 à 12%. L'utilisation de ces agglomérats facilite le traitement ultérieur selon l'invention en limitant l'opération de séchage.

L'invention propose dans un four fonctionnant en oxy-combustion comprenant une alimentation en granules de matières premières, le séchage au moins partiel des granules ou agglomérats de type briquette, ainsi éventuellement que leur préchauffage avant leur introduction dans le four. Le séchage en question est réalisé en utilisant l'énergie contenue dans les fumées.

Les fumées sortant des fours sont à des températures élevées même si elles n'atteignent pas celles des fours fonctionnant en aéro-combustion. Dans le cas des fours à oxy-combustion dont il est question, l'échange thermique entre la charge vitrifiable et les gaz de combustion est accru par un temps de séjour prolongé de ces derniers dans le four. Les gaz de combustion sont en effet pour la majeure partie, ou la totalité, récupérés en amont du four après qu'ils aient balayé toute la zone des matières premières surnageant sur le bain fondu.

Dans le cas d'un four à oxy-combustion les fumées sortant du four sont en général à moins de 1500°C alors qu'en aéro-combustion elles peuvent dépasser 1600°C.

Comme dans la publication précitée WO 2009/118333, l'énergie contenue dans les fumées est utilisée pour réchauffer l'oxygène alimentant les brûleurs du four. Ceci est réalisé par un échange thermique qui est avantageusement conduit en deux temps pour les raisons rappelées ci-dessous et qui tiennent à la nécessité de procéder au chauffage de l'oxygène à proximité des brûleurs.

L'oxygène chaud est extrêmement corrosif pour tous les alliages. La sécurité exige de limiter au maximum la présence de toute soudure, tout raccord, toute vanne, et même les courbures trop accentuées susceptibles d'accroître les mécanismes de corrosion dans les canalisations acheminant cet oxygène chaud. Le circuit entre le chauffage de l'oxygène et son utilisation dans les brûleurs du four doit être le plus court possible. Les fours de grande capacité s'étendent sur des longueurs qui ne permettent pas de disposer un seul échangeur pour le chauffage de tout l'oxygène en conservant la proximité des brûleurs. Pour cette raison le chauffage est réalisé dans une pluralité d'échangeurs de dimensions limitées situés à proximité immédiate des brûleurs, et chacun de ces échangeurs de chauffage de l'oxygène n'alimente qu'un très petit nombre de brûleurs, voire un seul.

Pour concilier le traitement des fumées rassemblées et celui de l'oxygène localisé près des brûleurs, il est nécessaire d'avoir recours à un double échange thermique. D'une part dans un premier échangeur les fumées servent à réchauffer de l'air constituant un fluide caloporteur. Cet air chauffé alimente des échangeurs secondaires utilisés pour chauffer l'oxygène.

Dans le premier échangeur les fumées peuvent porter l'air à des températures de l'ordre de 800°C ou plus. L'air en question véhicule donc une part importante de l'énergie contenue dans les fumées.

Selon l'invention le préchauffage de l'oxygène est effectué avantageusement dans des échangeurs constitués dans des aciers montrant une excellente résistance à l'oxygène chaud. Des échangeurs et des matériaux convenant à cet usage sont décrits dans la demande de brevet EP A 2145151.

L'oxygène chaud fourni par l'échangeur est porté à une température qui au plus peut atteindre 650°C. Cette valeur est fonction de la résistance que l'on peut obtenir avec des alliages métalliques qui présentent les meilleures caractéristiques. Cette température limite permet de garantir une durée d'utilisation en rapport avec le type d'installation considéré.

En pratique pour une meilleure sécurité il est préférable de maintenir la température de l'oxygène à moins de 600°C.

Pour que le préchauffage de l'oxygène soit suffisant pour améliorer le bilan énergétique de manière significative, il est préféré de régler les conditions de l'échange de sorte que la température de l'oxygène ne soit pas inférieure à 350°C.

La température de l'air caloporteur à la sortie des échangeurs de chauffage de l'oxygène est ainsi ramenée au plus à 600°C et peut s'abaisser jusqu'à environ 350°C selon les débits respectifs des gaz impliqués dans l'échange thermique.

Dans toutes les configurations le chauffage de l'oxygène, même porté aux températures les plus élevées praticables comme indiqué ci-dessus, ne peut absorber la totalité de l'énergie des fumées, ni même la totalité de l'énergie contenue dans l'air servant de caloporteur entre les échangeurs primaires et secondaires. Dans ces conditions l'air ayant réchauffé l'oxygène selon l'invention est utilisé pour sécher les granules de matières, et éventuellement pour préchauffer ces granules.

Les fumées sortant du premier échangeur sont encore à des températures élevées. Avant de pouvoir les rejeter ces fumées doivent faire l'objet d'un traitement de désulfuration. Pour les techniques traditionnelles de désulfuration les fumées doivent être ramenées à des températures comprises avantageusement entre 300 et 400°C.

Le refroidissement des fumées résultant de l'échange avec l'air caloporteur servant au chauffage de l'oxygène peut être insuffisant pour ramener la température dans les conditions indiquées ci-dessus. Dans ce cas un deuxième échange peut être aménagé dans un échangeur supplémentaire.

La teneur en eau des granules est variable. Elle peut s'élever dépendant de l'état initial des composants, jusqu'à des taux de l'ordre de 10-12% en poids ou plus. De telles proportions si elles facilitent la formation des granules, ne sont pas satisfaisantes pour leur acheminement, ni pour l'alimentation du four.

Le séchage des granules est destiné à ramener le taux d'humidité aussi bas que possible tout en conservant la cohésion de ces granules. Dans l'alimentation traditionnelle comme indiqué précédemment le taux d'humidité de la charge se situe environ à 4% en poids. L'utilisation de granules en place de ces matières pulvérulentes permet d'abaisser sensiblement la teneur en eau. Comme indiqué précédemment l'utilisation d'agglomérats compressés peut conduire à des teneurs en eau initiales sensiblement moindre. Dans les deux cas le séchage permet de réduire encore la teneur en eau. Des valeurs de 2% ou moins sont avantageusement mises en oeuvre après séchage selon l'invention.

La mise en oeuvre du séchage selon l'invention pour éliminer l'eau excédentaire lorsque celle-ci est notamment en proportion supérieure à 4% en poids. Le séchage des granules ou agglomérats compressés, utilise l'air ayant réchauffé l'oxygène, dans un échangeur thermique qui met directement en contact les granules et le gaz de séchage. Ceux-ci entrainent l'eau sous forme de vapeur. Il convient d'éviter la condensation de cette vapeur dans l'échangeur.

Bien entendu il est avantageux de porter les granules ou agglomérats, aux températures les plus élevées possibles qui soient compatibles avec la nature de leurs constituants. Il est nécessaire ainsi de ne pas excéder une température qui les rendrait « collants ». En pratique la température de ces produits ne doit pas dépasser 550°C et de préférence pas être supérieure à 500°C dans l'échangeur.

Pour tenir compte de la résistance des alliages utilisés, la température des gaz entrant dans l'échangeur ne dépasse pas de préférence 650°C, et est avantageusement égale ou inférieure à 600°C.

Eventuellement si la température du mélange des gaz entrant dans l'échangeur de chauffage des matières premières est trop élevée, un ajustement peut être entrepris par dilution avec de l'air ambiant.

L'invention est définie par le procédé de la revendication 1 et décrite de façon détaillée dans la suite en faisant référence aux planches de dessins dans lesquelles :
- la figure 1 est un schéma général illustrant le mode de fonctionnement en oxy-combustion d'un four verrier de fusion de grande capacité ;
- la figure 2 illustre de manière plus détaillée le traitement des fumées de la figure 1 ;
- la figure 3 illustre de manière synoptique le fonctionnement du four comprenant un mode de séchage des granules ;
- la figure 4 présente une autre variante de l'invention;
- la figure 5 est analogue à la figure 4, et comprend en plus un chauffage supplémentaire des granules ;
- la figure 6 représente une autre variante des modalités illustrées aux figures 3 et 4.

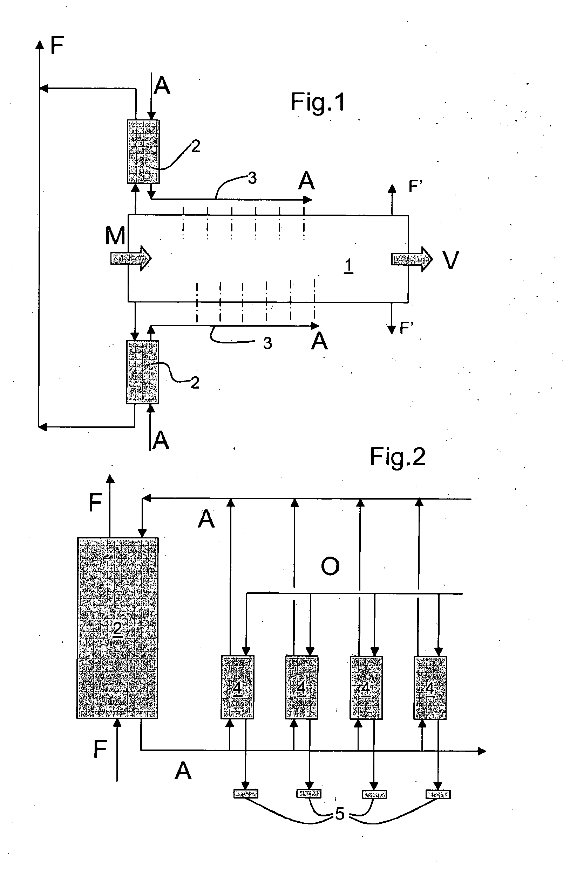

Le four schématisé à la figure 1 est du type de ceux utilisés pour les productions de grande capacité comme ceux servant à alimenter la production de verre plat par les techniques de verre "floté". Des fours de ce type produisent en continu des quantités de verre qui peuvent aller jusqu'à 1000 tonnes/jour. Pour atteindre ces performances les fours doivent présenter une puissance qui atteint 60 MW. Pour ce type de four la production n'est pas inférieure à 300 tonnes/jour. De sa capacité dépend au moins en partie le mode de fonctionnement du four et notamment tout ce qui touche aux questions d'optimisation de la consommation énergétique comme précisé dans la suite.

Le four comprend un bassin de fusion et affinage 1 dans lequel les matériaux M constituant la charge vitrifiable sont enfournés à une extrémité et le verre fondu V est extrait à l'autre extrémité pour suivre son traitement dans la zone de conditionnement puis jusqu'à la formation de la feuille sur "float".

Sur le four, et particulièrement dans la partie amont de celui-ci, des brûleurs à oxy-combustion sont distribués de part et d'autre du bassin de fusion. L'emplacement de ces brûleurs, non représentés, est matérialisé sur le schéma par les traits mixtes.

Les gaz de combustion ou fumées F sont essentiellement, ou même en totalité, évacués dans la partie amont du four à proximité de l'enfournement des matières premières. Le cas échéant une fraction modeste de ces gaz F' peut être dirigée vers l'extrémité aval du four dans le but de prévenir la pénétration dans l'enceinte du four d'air en provenance de la zone de conditionnement située en aval.

La circulation des gaz de combustion à contre-courant du sens général d'écoulement du verre permet de maximiser le transfert de chaleur dans l'enceinte. Néanmoins la température des gaz de combustion sortant groupés du four reste très élevée. Ils sont ordinairement à des températures de l'ordre de 1200 à 1400°C.

Le passage dans un premier échangeur thermique 2 permet d'abaisser la température de ces gaz et surtout de récupérer une partie de la chaleur qu'ils véhiculent.

Dans le schéma de la figure 1 deux échangeurs 2 sont présentés, un sur chaque côté du four pour faciliter le traitement. Eventuellement la présence de deux échangeurs permet d'interrompre le fonctionnement de l'un d'entre eux pour en assurer la maintenance le second traitant momentanément l'ensemble des gaz de combustion. Dans cette hypothèse non représentée, le gaz caloporteur, de l'air A, échangeant avec les fumées doit également alimenter les deux canalisations symétriques 3 conduisant l'air vers les échangeurs de chauffage de l'oxygène.

Le gaz qui récupère la chaleur dans l'échangeur 2 doit servir à réchauffer l'oxygène O utilisé dans les brûleurs. Pour la raison notamment que le chauffage de l'oxygène doit intervenir au plus près de l'emplacement de son utilisation, le chauffage est conduit systématiquement dans des échangeurs 4 proches des brûleurs 5 comme présenté à la figure 2. Les échangeurs 4 reçoivent d'une part le gaz caloporteur, typiquement de l'air A, préalablement chauffé par les fumées dans l'échangeur 2, et d'autre part l'oxygène. Contrairement à l'oxygène chaud, l'air chaud A peut être transporté sans dommage sur une certaine distance.

Dans les échangeurs 4 l'oxygène passe de la température ambiante à une température qui peut atteindre au plus haut 550-600°C.

A la figure 2 chaque brûleur 5 est alimenté en oxygène chaud O par un échangeur 4. Le cas échéant un échangeur 4 peut alimenter quelques brûleurs. Mais le plus souvent, chaque échangeur n'alimente pas plus de deux brûleurs simultanément.

Dans la demande précitée WO 2009/118333, le gaz caloporteur effectue un double échange. D'une part il est chauffé par les fumées et d'autre part il chauffe l'oxygène. La circulation du gaz caloporteur entre les échangeurs s'effectue en circuit fermé. Le circuit de ce gaz, qui est reproduit à la figure 2 fait retour du gaz à l'échangeur 2 après qu'il ait réchauffé l'oxygène. De cette façon l'énergie encore contenue dans ce gaz caloporteur est conservée.

La température de ce gaz, après avoir chauffé l'oxygène dans les échangeurs 4, est encore relativement élevée. Elle peut atteindre 500°C ou plus. L'utilisation de l'énergie emmagasinée dans ce gaz reste donc importante. Un objet de l'invention est d'utiliser l'énergie de ce gaz caloporteur A pour chauffer les matières premières.

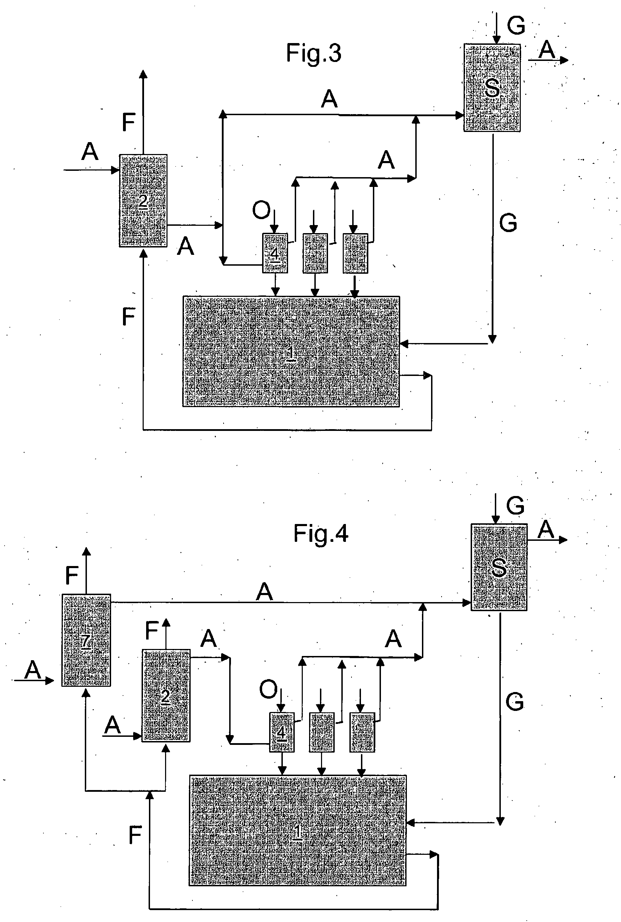

Contrairement à ce qui est représenté à la figure 2, correspondant à l'art antérieur cité, selon l'invention, représentée aux figures 3, 4, 5 et 6, l'air caloporteur A n'est pas retourné à l'échangeur 2 après le chauffage de l'oxygène O. Cet air en provenance des différents échangeurs 4 est rassemblé et dirigé vers un échangeur sécheur S pour sécher les granules ou agglomérats compressés, G, avant l'enfournement de ceux-ci.

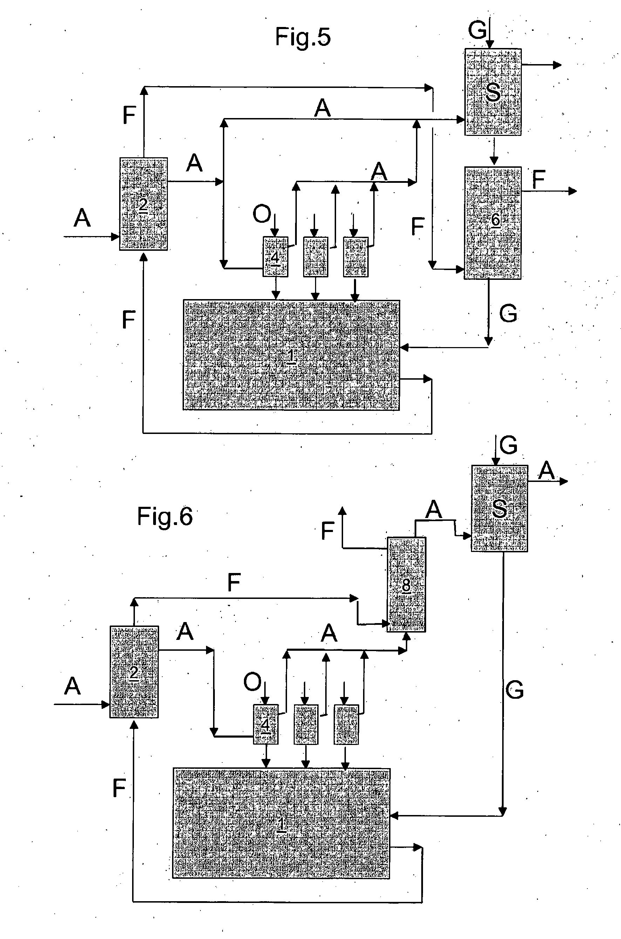

L'énergie véhiculée par l'air A après le chauffage de l'oxygène permet le séchage au moins partiel des granules ou agglomérats G. Néanmoins il est préférable d'ajouter une source supplémentaire pour atteindre un séchage/chauffage plus significatif. Un moyen consiste, comme représenté aux figures 3, et 5, dans le fait d'utiliser un autre apport d'air caloporteur. Cet apport comme aux figures 3 et 5 est constitué d'une partie de l'air caloporteur sortant de l'échangeur 2, mais qui est directement envoyé vers le sécheur S sans avoir servi au chauffage de l'oxygène et qui en conséquence se trouve à température sensiblement plus élevée. Cette partie de l'air est ajoutée à celle ayant servi au chauffage de l'oxygène. La combinaison de ces deux sources permet d'atteindre les températures adéquates, pour l'entrée dans le sécheur. Au besoin un apport additionnel d'air ambiant permet d'abaisser la température.

Le plus souvent, après l'échangeur 2 les fumées sont encore à température trop élevées pour faire l'objet d'une désulfuration. Sauf à effectuer une circulation fumées/air à contre courant comme à la figure 3, la température de sortie des fumées n'est généralement pas inférieure à 700°C.

Bien entendu ces fumées pourraient être rejetées après dilution avec de l'air ambiant pour ramener la température à un niveau compatible avec la désulfuration sur électro-filtre. Mais cette façon de procéder est peu avantageuse au plan énergétique. Il est préférable par exemple comme illustré à la figure 4 de renouveler l'échange thermique avec un nouvel apport d'air également chauffé par échange thermique avec les fumées issues de l'échangeur 2, air qui est ajouté à celui ayant servi au chauffage de l'oxygène, l'ensemble servant au séchage des granules ou agglomérats.

La variante illustrée à la figure 6 consiste à utiliser les fumées sortant de l'échangeur 2 pour surchauffer l'air qui a préalablement servi au chauffage de l'oxygène. L'opération s'effectue dans l'échangeur 8 situé en amont du séchage.

Quelle que soit la provenance de l'air chaud dirigé vers le séchage, sa température ne doit pas excéder celle qui pourrait rendre les produits "collants". Pour des compositions vitrifiables typiques de ces granules ou agglomérats, la température ne doit pas dépasser 600°C

Si la température de l'air est supérieure à 600°C un abaissement peut être aménagé par exemple par adjonction d'air supplémentaire à température ambiante.

Le séchage des granules ou agglomérats s'accompagne normalement d'un échauffement. Celui-ci reste modéré en raison de la forte absorption d'énergie de vaporisation de l'eau. Il peut être avantageux de prolonger l'échauffement des produits sans dépasser les valeurs limites indiquées précédemment.

La figure 5 illustre un mode de chauffage de granules, ou agglomérats, distinct de celui qui résulte de l'opération de séchage. Dans cette variante les fumées provenant de l'échangeur 2 sont envoyées dans un échangeur 6, dans lequel elles servent au chauffage des granules ou agglomérats provenant du séchage.

Dans cet échangeur 6 les fumées et les granules ou agglomérats sont dans des circuits séparés. Le chauffage est obtenu principalement par conduction les granules ou agglomérats se trouvant au contact des parois de l'échangeur 6 chauffées par les fumées. Cette configuration permet encore de ramener les fumées à des températures convenant à leur traitement de désulfuration, et les granules ou agglomérats peuvent être portés aux plus hautes températures compatibles avec leur composition.

La technique selon l'invention est mise en oeuvre sur un four verrier produisant 750 tonnes par jour de verre, fonctionnant en oxy-combustion. Le schéma de fonctionnement est celui illustré à la figure 3. Les modalités s'établissent ainsi :
dans le four
   - consommation de gaz 3900 Nm³/h
   - consommation d'oxygène 8000 Nm³/h
   - débit des fumées à la sortie du four 18700 Nm³/h
   - température des fumées à la sortie du four 1400°C 1 échangeurs (2)
   - température de sortie des fumées 450°C
   - air entrant à température ambiant chauffé en sortie à 800°C
   - débit d'air 29000 Nm³/h, dont 15300 Nm³/h sont utilisés pour le chauffage de l'oxygène
10 brûleurs et échangeurs (4) de chauffage de l'oxygène
   - température de l'oxygène en sortie des échangeurs (4) 550°C
   - température de l'air à la sortie des échangeurs (4) 350°C
mélange d'air à 800°C et air à 350°C conduisant à une température de 550°C pour un débit de 29000 Nm³/h à l'entrée du sécheur S
granules :
   - composition % en poids : sable de silice 59 ; carbonate de sodium 20 ; dolomie 20 ; sulfate de sodium 0,4 ; alumine 0,6 ; avec une solution de silicate de sodium comme liant l'ensemble représentant 80% de matières premières non vitrifiées, auxquelles sont ajoutés 20% de calcin
   - teneur en eau initiale de 10% en poids par rapport aux matières premières non vitrifiées
   - 2mm de diamètre
   - entrant dans le séchage à température ambiante et
   - séjournant en moyenne 10 mn dans le sécheur
   - présentant en sortie une teneur en eau inférieure à 1% en poids, est une température supérieure à 250°C.

Le bénéfice de la mise en oeuvre du séchage des matières premières en termes d'économie d'énergie est supérieur à celui provenant du chauffage de l'oxygène. Le séchage/chauffage des granules conduit approximativement à un gain énergétique de l'ordre de 15%, soit environ 0,82GJ /tonne de verre, auquel s'ajoute l'économie correspondante sur la consommation d'oxygène. Le séchage/chauffage des granules contribue donc de manière significative à l'économie globale des fours fonctionnant en oxy-combustion. Cette économie autorise la mise en oeuvre de ces techniques en dépit des investissements nécessaires supplémentaires. Le bilan est d'autant plus positif que les fours considérés sont de capacité plus importante.

## Revendications

1. Procédé de fusion du verre chauffé dans un four au moyen de brûleurs, dans lequel l'énergie de combustion est produite par oxy-combustion pour au moins 65%, et de préférence au moins 80%, les gaz de combustion à la sortie du four étant passés dans un premier échangeur thermique (2), où circule de l'air, l'air et les gaz de combustion étant dans des circuits distincts et séparés, l'air chauffé dans ce premier échangeur (2) étant passé dans au moins un second échangeur (4) destiné à préchauffer le comburant à base d'oxygène, le comburant et l'air circulant dans des circuits distincts et séparés, **caractérisé en ce que** l'air sortant de ce second échangeur (4) étant passé dans un ensemble de séchage (S) où il est mis en contact avec la charge vitrifiable, préalablement constituée sous forme de granules ou d'agglomérats compressés.

2. Procédé selon la revendication 1 dont la capacité de production journalière est d'au moins 300 tonnes.

3. Procédé selon la revendication 1 dans lequel l'air chauffé dans le premier échangeur (2) est en partie envoyé dans le ou les seconds échangeurs (4) de chauffage du comburant, et pour partie mélangé avec l'air sortant des ce, ou ces deuxièmes échangeurs (4), pour le séchage des granules ou agglomérats.

4. Procédé selon la revendication 1 dans lequel les gaz de combustion sortant du premier échangeur (2) passent dans un (7) échangeur où ils chauffent de l'air qui est ensuite mélangé à celui sortant du, ou des deuxièmes échangeurs (4), pour le séchage des granules ou agglomérats.

5. Procédé selon l'une des revendications précédentes dans lequel le flux d'air de séchage et celui de granules ou agglomérats sont tels que leur température ne dépasse pas 550°C et de préférence 500°C.

6. Procédé selon l'une des revendications précédentes dans lequel la température de l'air entrant dans l'ensemble de séchage n'est pas supérieure à 600°C.

7. Procédé selon 1 revendication 1 dans lequel les granules ou agglomérats, avant séchage présentent une teneur en eau pondérale supérieure à 4%.

8. Procédé selon l'une des revendications précédentes dans lequel une partie au moins des gaz de combustion sortant du premier échangeur (2) est passée dans un échangeur (6) dans lequel ces gaz servent à réchauffer, sans contact, les granules ou agglomérats préalablement séchés.

9. Procédé selon la revendication 8 dans lequel dans l'échangeur (6), les granules ou agglomérats progressent par gravité et la circulation des gaz de combustion est à contrecourant de cette charge vitrifiable et sans contact avec celle-ci.

## Patentansprüche

1. Schmelzverfahren des mit Hilfe von Brennern in einem Ofen erwärmten Glases, wobei mindestens 65%, und vorzugsweise mindestens 80%, der Verbrennungsenergie durch Verbrennung mit Sauerstoff erzeugt werden, wobei die Verbrennungsgase am Ausgang des Ofens in einen ersten 5 Wärmetauscher (2) geleitet werden, in dem Luft zirkuliert, wobei die Luft und die Verbrennungsgase sich in unterschiedlichen und getrennten Kreisläufen befinden, wobei die in diesem ersten Tauscher (2) erwärmte Luft in mindestens einen zweiten Tauscher (4) geleitet wird, der dazu bestimmt ist, den brandfördernden Stoff auf der Basis von Sauerstoff vorzuwärmen, wobei der brandfördernde Stoff und die Luft in unterschiedlichen und getrennten Kreisläufen zirkulieren, **dadurch gekennzeichnet, dass** die aus diesem zweiten Tauscher (4) austretende Luft in eine Trocknungseinheit (S) geleitet wird, wo sie mit dem glasbildenden Füllstoff in Kontakt gebracht wird, der vorher in Form von Granulaten oder Pressagglomeraten gebildet wird.

2. Verfahren nach Anspruch 1, dessen tägliche Produktionskapazität mindestens 300 Tonnen beträgt.

3. Verfahren nach Anspruch 1, wobei die im ersten Tauscher (2) erwärmte Luft zum Teil in den oder die zweiten Tauscher (4) zur Erwärmung des brandfördernden Stoffs geschickt und zum Teil zum Trocknen der Granulate oder Pressagglomerate mit der aus diesem oder diesen zweiten Tauschern (4) austretenden Luft vermischt wird.

4. Verfahren nach Anspruch 1, wobei die aus dem ersten Tauscher (2) austretenden Verbrennungsgase in einen Tauscher (7) gehen, wo sie Luft erwärmen, die anschließend zum Trocknen der Granulate oder Pressagglomerate mit derjenigen vermischt wird, die aus dem oder den zweiten Tauschern (4) austritt.

5. Verfahren nach einem der vorhergehenden Ansprüche, wobei der Strom von Trockenluft und derjenige von Granulaten oder Pressagglomeraten so sind, dass ihre Temperatur 550°C und vorzugsweise 500°C nicht überschreitet.

6. Verfahren nach einem der vorhergehenden Ansprüche, wobei die Temperatur der in die Trocknungseinheit eintretenden Luft nicht höher als 600°C ist.

7. Verfahren nach Anspruch 1, wobei die Granulate oder Pressagglomerate vor dem Trocknen einen Gewichtsgehalt an Wasser von mehr als 4% aufweisen.

8. Verfahren nach einem der vorhergehenden Ansprüche, wobei mindestens ein Teil der aus dem ersten Tauscher (2) austretenden Verbrennungsgase in einen Tauscher (6) geleitet wird, wobei diese Gase dazu dienen, die vorher getrockneten Granulate oder Pressagglomerate kontaktlos aufzuwärmen.

9. Verfahren nach Anspruch 8, wobei die Granulate oder Pressagglomerate sich im Tauscher (6) durch Schwerkraft verbreiten, und die Zirkulation der Verbrennungsgase im Gegenstrom zu diesem glasbildenden Füllstoff und ohne Kontakt mit diesem ist.

## Claims

1. Method of melting glass heated in a furnace by means of burners, in which method at least 65%, and preferably at least 80%, of the combustion energy is produced by oxycombustion, the combustion gases leaving the furnace being passed through a first heat exchanger (2) in which air circulates, the air and the combustion gases being in distinct and separate circuits, the air heated in this first exchanger (2) being passed through at least a second exchanger (4) intended to preheat the oxygen-based oxidant, the oxidant and the air circulating in distinct and separate circuits, **characterized in that** the air leaving this second exchanger (4) is passed through a drying assembly (S) where it is brought into contact with the vitrifiable charge made up beforehand in the form of granules or compressed agglomerates.

2. Method according to Claim 1 of which the daily production capacity is at least 300 tonnes.

3. Method according to Claim 1, in which the air heated in the first exchanger (2) is in part sent into the oxidant-heating second exchanger or exchangers (4), and in part mixed with the air leaving this or these second exchanger or exchangers (4) for drying the granules or agglomerates.

4. Method according to Claim 1, in which the combustion gases leaving the first exchanger (2) pass through an exchanger (7) in which they heat air which is then mixed with the air leaving the second exchanger or exchangers (4), for drying the granules or agglomerates.

5. Method according to one of the preceding claims, in which the flow of drying air and the flow of granules or agglomerates are such that their temperature does not exceed 550°C and preferably 500°C.

6. Method according to one of the preceding claims, in which the temperature of the air entering the drying assembly does not exceed 600°C.

7. Method according to Claim 1, in which the granules or agglomerates prior to drying have a total water content by weight in excess of 4%.

8. Method according to one of the preceding claims, in which at least part of the combustion gases leaving the first exchanger (2) is passed through an exchanger (6) in which these gases are used to heat up, contactlessly, the granules or agglomerates previously dried.

9. Method according to Claim 8, in which, in the exchanger (6), the granules or agglomerates progress under gravity and the combustion gases circulate countercurrent-wise with respect to this vitrifiable charge and without contact therewith.
